# EUROPEAN PATENT SPECIFICATION

(11) **EP 1 213 215 B1**
(45) Date of publication and mention of the grant of the patent: **03.01.2007**
(21) Application number: 01126629.3
(22) Date of filing: 07.11.2001
(51) Int. Cl.: B62K 15/00, B62M 23/02

(54) **Steering device for bicycle and method of folding the steering device**
Eine Lenkvorrichtung für ein Fahrrad und Verfahren zum Zusammenklappen der Lenkvorrichtung
Un système de direction pour une bicyclette et procédé pour son pliage

(30) Priority: 07.12.2000 JP 2000373093
(43) Date of publication of application: 12.06.2002
(73) Proprietor: HONDA GIKEN KOGYO KABUSHIKI KAISHA, Minato-ku, Tokyo (JP)
(72) Inventor: Nakagomi, Yoshio, Wako-shi, Saitama (JP); Nagura, Hidenori, Wako-shi, Saitama (JP); Shimmura, Hiroyuki, Wako-shi, Saitama (JP); Fukuma, Go, Wako-shi, Saitama (JP)
(74) Representative: Liska, Horst

(56) References cited:
- DE-U- 20 002 572
- US-A- 4 202 561
- US-A- 4 433 852

## Description

The present invention relates to a bicycle and a method of folding a steering device for a bicycle, preferable for folding a handle post supporting a handle while preventing the handle from stretching out largely in the vehicle width direction. In particular, the present invention relates to a bicycle according to the preamble part of claim 1 and to a method according to the preamble part of claim 7.

Use of bicycles such as motor-assisted bicycles has been widened, and, in some cases, the bicycle is transported by a private vehicle or the like to a resort or a shopping center, where the bicycle is used. In such a case, it is desirable that the bicycle can be folded up into an easily transportable form. For example, Japanese Patent Publication No. Sho 52-30048 discloses a bicycle in which a handle projecting upward from a handle post can be folded up along the front-rear direction of the vehicle, for convenience of transportation or storage. In this bicycle, the handle is set along the vehicle body by turning the handle with the handle post as a pivot, and is then folded by swirling it with a support portion (lug) at the upper end of the handle post as a center.

In the bicycle described in the publication, where the length from the lug to the top end of the handle is large, the locus of the upper end of the handle at the time of folding the handle stretches out largely in the vehicle body width direction. Therefore, a large space is required for folding up the bicycle, so that use may be limited.

A bicycle according to the preamble part of claim 1 is disclosed in document US-A-4202561. The generic bicycle comprises a head pipe and a steering device for steering a front wheel, wherein a handle post of the steering device comprises a first portion connected to a handle and a second portion supported within the head pipe. A joint connects the first and second portions. For folding the known steering device, the first portion comprises a tubular portion which is arranged in a horizontal plane and inclined by an angle of about 45° with respect to the fore and aft direction of the bicycle. The joint receives said tubular portion and, thus, the first portion is freely turnable with respect to the second portion around an axis of said tubular portion. The known steering device is adapted to perform the folding operation by only this single turning movement requiring considerable space in the bicycle width direction.

For further illustration of the background art, reference can also be made to document US-A-4433852, disclosing a foldable steering device for a bicycle in which a handle portion can be turned around an axis that is arranged in a horizontal plane and inclined by an angle of about 45° with respect to the fore and aft direction of the bicycle or to document DE-U-20002572, disclosing a scooter having a handlebar that can be folded around an axis that is aligned in the fore and aft direction.

It is an object of the present invention to solve the above-mentioned problem and to provide a bicycle and a method of folding a steering device for a bicycle in which folding is easy and it is possible to reduce the stretching-out of the handle in the bicycle width direction at the time of folding.

To attain the above object, the present invention provides a bicycle according to claim 1.

In a preferred embodiment of the present invention, the joint includes a shaft means extending in the deviating direction from the first portion of the handle post and engaged with the second portion, and a fastening means for connecting the first and second portions by fastening the shaft means to the second portion.

In a further embodiment of the present invention the first portion and the second portion are engaged with each other by recessed and projected portions thereof, the engagement and disengagement of the recessed and projected portions are conducted by moving the shaft means in the deviating direction, and turnings of the first portion around the pivotal axis of the head pipe and in a plane orthogonal to the deviating direction are permitted in the condition where the recessed and projected portions are disengaged from each other.

In a further embodiment of the present invention the fastening means is so constructed that the shaft means is constituted of a bolt including a screw portion screwed into the first portion and a knob engaged with the second portion. In a further embodiment of the invention the fastening means includes an eccentric shaft for connecting the shaft means and the first portion and is so constructed that the connection and disconnection of the first portion and the second portion are conducted by turning the eccentric shaft and thereby moving the shaft means in the longitudinal direction thereof.

In a further embodiment of the present invention a restricting means is provided for restricting the amount of movement of the shaft means in the axial direction, and disengagement of the recessed and projected portions is permitted by releasing the restricting means.

To attain the above object, in addition, the present invention provides a method of folding a steering device for bicycle according to claim 7. Thus, the method according to the invention includes the steps of: turning the first portion with respect to the second portion around the pivotal axis of the head pipe to thereby set the extending direction of the handle along the front-rear direction of the bicycle; and turning the first portion in a plane orthogonal to the deviating direction of the second portion to move the handle to the lower side of the bicycle.

According to an embodiment of the present invention, in the method of folding a steering device for a bicycle the steering device further includes a shaft means extending in the deviating direction from the first portion and engaged with the second portion, a screw portion formed in the shaft means, a fastening means for connecting the first and second portions by screwing the screw portion into the first or the second portion, and a restricting means for restricting the amount of movement of the shaft means in the axial direction, wherein the method includes the steps of: loosening the nut to release the restricting means and moving the shaft means to thereby disengage the first portion and the second portion from each other; turning the first portion witch respect to the second portion around the pivotal axis of the head pipe to thereby set the extending direction of the handle along the front-rear direction of the bicycle; and turning the first portion in a plane orthogonal to the deviating direction of the second portion versus the first portion to thereby move the handle to the lower side of the bicycle.

In a method according to a further embodiment of the present invention the steering device further includes a shaft means extending in the deviating direction from the first portion of the handle post and engaged with the second portion, a fastening means including an eccentric shaft for connecting the shaft means and the first portion to each other and so constructed that the connection and disconnection of the first portion and the second portion are conducted by turning the eccentric shaft and thereby moving the shaft means in the longitudinal direction thereof, and a restricting means for restricting the amount of movement of the shaft means in the axial direction, wherein the method includes the steps of: turning the eccentric shaft to release the fastening by the fastening means; releasing the restricting means and moving the shaft means to disengage the first portion and the second portion from each other; turning the first portion with respect to the second portion around the pivotal axis of the head pipe to thereby set the extending direction of the handle along the front-rear direction of the vehicle body; and turning the first portion in a plane orthogonal to the deviating direction of the second portion versus the first portion to thereby move the handle to the lower side of the bicycle.

According to the above characteristic features, the first portion of the handle post is turned with respect to the second portion around the pivotal axis of the head pipe so that the handle is set off in the bicycle width direction. Then, the handle post is turned along the bicycle at the offset position, whereby the handle is moved to the lower side of the bicycle, and the steering device including the handle is folded up. Particularly, according to the features of claims 5 and 9, by only turning the eccentric shaft, the fastening of the first portion and the second portion is loosened, and the handle post comes to be turnable.

As is clear from the above description, according to the inventions as set forth in claims 1 to 9, the handle can be swirled with the head pipe as a center with such an offset amount as to be along a side surface of the bicycle, and the handle and the handle post can be turned in a plane along the side surface of the bicycle. Therefore, a steering device with a large height from a folding portion to the top end can be folded up without taking a large space in the bicycle width direction. As a result, the bicycle can be easily disassembled, and complicatedness relating to transportation of the bicycle to a resort or the like and use of the bicycle is alleviated. Particularly, according to the inventions as set forth in claim 5 and claim 9, folding of the handle post can be easily started by turning the eccentric shaft, so that operability is good.

Now, one embodiment of the present invention will be described referring to the drawings.
FIG. 1 is a side view of a motor-assisted bicycle according to one embodiment of the present invention.
FIG. 2 is a perspective view from the left front side of a rear frame.
FIG. 3 is a plan view of the rear frame.
FIG. 4 is a side view of a major part around an assist unit.
FIG. 5 is a sectional perspective view showing the structure of a battery.
FIG. 6 is a perspective view of a battery box.
FIG. 7 is a sectional side view of the battery box.
FIG. 8 is a sectional view taken along line A-A of FIG. 4.
FIG. 9 is a sectional plan view of an end block provided at a front frame.
FIG. 10 is a front view of the end block provided at the front frame.
FIG. 11 is a sectional plan view according to a modified embodiment of the end block.
FIG. 12 is a front view according to the modified embodiment of the end block.
FIG. 13 is a sectional plan view of a joint of a handle post.
FIG. 14 is a perspective view of a major part of the joint of the handle post.
FIG. 15 is a perspective view of the joint of the handle post.
FIG. 16 is a horizontal sectional view of a major part of a handle post according to a modified embodiment of the joint.
FIG. 17 is a vertical sectional view of a major part of the handle post according to the modified embodiment of the joint.
FIG. 18 is a front view of a stem.
FIG. 19 is a left side view of the stem.
FIG. 20 is a right side view of the stem.
FIG. 21 is a perspective view of a major part of the handle post according to a modified embodiment of the joint.
FIG. 22 is a perspective view of a major part of the handle post at the time of starting folding.
FIG. 23 is a perspective view of a major part of the handle post at a first position in the course of folding.
FIG. 24 is a perspective view of a major part of the handle post at a second position in the course of
folding. FIG. 25 is a perspective view of a major part of the handle post at the time of end of folding.
FIG. 26 is a side view of a major part of the bicycle in the condition where the handle post is folded up.
FIG. 27 is a sectional view taken along line D-D of FIG. 20.
FIG. 28 is a plan view of a tray in which a motor-assisted bicycle is contained.
FIG. 29 is a perspective view of the tray in which the motor-assisted bicycle is contained.
FIG. 30 is a perspective view of a rear portion of a four-wheel automobile provided with the tray.
FIG. 31 is a sectional view of the rear portion of the four-wheel automobile provided with the tray.

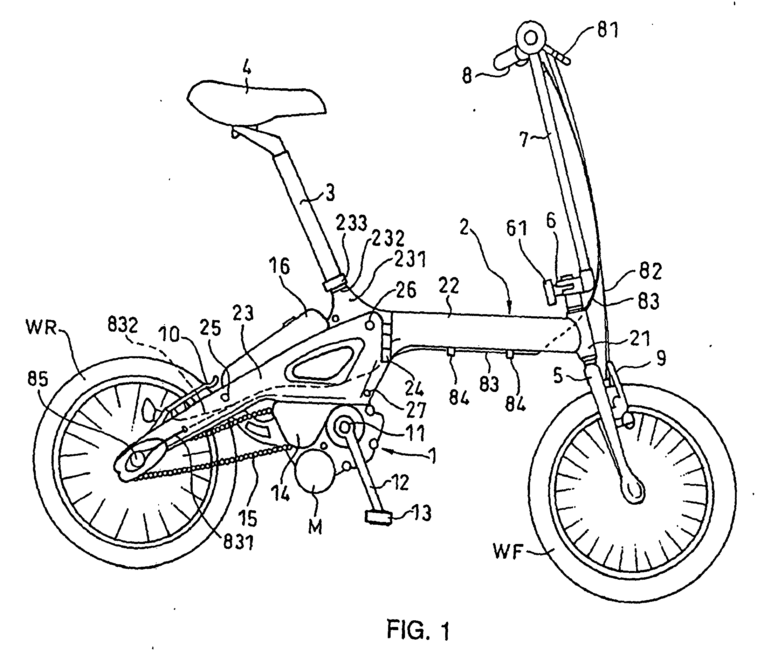

FIG. 1 is a side view of a motor-assisted bicycle including a steering device according to one embodiment of the invention. A vehicle body frame 2 of the motor-assisted bicycle includes a head pipe 21 located on the front side of the vehicle body, a pipe-shaped front frame 22 extending roughly horizontally rearwards from the head pipe 21, and a rear frame 23 connected to the rear end of the front frame 22. The rear frame 23 is a split frame consisting of a left-right pair of die-cast aluminum products. The split frame is a bifurcated structure having a connecting portion 231 at a front portion of the vehicle body frame, and the connecting portion 231 is provided with a boss 232 extending skewly rearwardly upwards for holding a seat post 3.

The boss 232 is provided with a fastening allowance, and the seat post 3 is securely held by the boss 232 by fastening a clamper 233. With the clamper 233 loosened, the seat post 3 can be slidden upwards and downwards relative to the boss 232, whereby the height of a seat 4 fitted to the upper end of the seat post 3 can be adjusted. In addition, the seat post 3 can be completely separated by drawing out from the boss 232. Further, the connection structure of the seat post 3 and the boss 232 is adopted also for the connection of the seat 4 and the seat post 3, whereby the seat 4 and the seat post 3 can be easily connected and separated.

A front fork 5 is turnably held by the head pipe 21 through a shaft portion provided at an upper portion. A handle post 7 is connected through a joint 6 to the upper end of the shaft portion provided at an upper portion of the front fork 5, and a handle 8 as a part of the steering device is connected to an upper portion of the handle post 7. The joint 6 can be loosened by an operation of a knob 61, and by this operation, the handle post 7 can be folded up with the joint 6 as a center. The mode of folding up and the details of the joint 6 will be described later. A front wheel WF is rotatably shaft-supported at the lower end of the front fork 5. The tip end of a wire 82 extending downwards from a brake lever 81 of the steering handle 8 is connected to a front brake 9 provided at the front wheel WF.

The rear frame 23 is connected to the front frame 22 through a hinge 24 and a lock device provided on the opposite side of the hinge 24, namely, on the left side of the vehicle body. By releasing the locking of the lock device, the vehicle body can be folded up with the hinge 24 as a pivot, and by releasing the connection of the hinge 24, the front frame 22 and the rear frame 23 can also be separated from each other. The details of the lock device and the hinge 24 will be described later.

The appearance of the rear frame 23 in side view has a shape wider on the front side of the vehicle and gradually narrowed toward the rear side. A rear wheel WR as a driving wheel is shaft-supported between the rear ends of the left-right pair of rear frames 23. Wires 83 are extended from a left portion of the handle 8 toward a rear portion of the vehicle body. The wires 83 are two wires, one of which is a rear brake wire 832 connected to a rear brake 10 provided on the rear frame 23, and the other of which is a speed change gear wire 831 connected to a speed change gear 85 provided in the vicinity of a rear end portion of the rear frame 23. In the course of extending rearwards, the wires 83 are rigidly bound to a lower portion of the front frame 22 by bands 84, 84.

In the rear frame 23, the rear brake wire 832 is distributed to the left side of the vehicle body, while the speed change gear wire 831 is distributed to the right side of the vehicle body. The rear brake wire 832 and the speed change gear wire 831 thus distributed to the left and right sides extend rearwards in the rear frame 23.

A motor assist unit (assist unit) 1 disposed on the rear side of an extension line of the seat post 3 is hung from a lower portion of the wider portion, namely, a front portion of the rear frame 23. The assist unit 1 is fixed by co-fastening at the time of mounting the rear frame 23 by a bolt 25 and a bolt 27 for fastening the left and right split portions of the rear frame 23. The assist unit 1 includes an electric motor M for assisting a tread force located at a lowermost portion thereof, and a crank shaft 11 located on the upper front side of the motor M. Cranks 12 are respectively fixed to the left and right ends of the crank shaft 11, and pedals 13 are provided at the tip ends of the cranks 12. The pedals 13 are used in the state of horizontally extending in the left-right direction; by adopting a hinge at connecting portions between the pedals 13 and the cranks 12, the pedals 13 can be so constituted that they can be folded to be along the cranks 12 when they are not used.

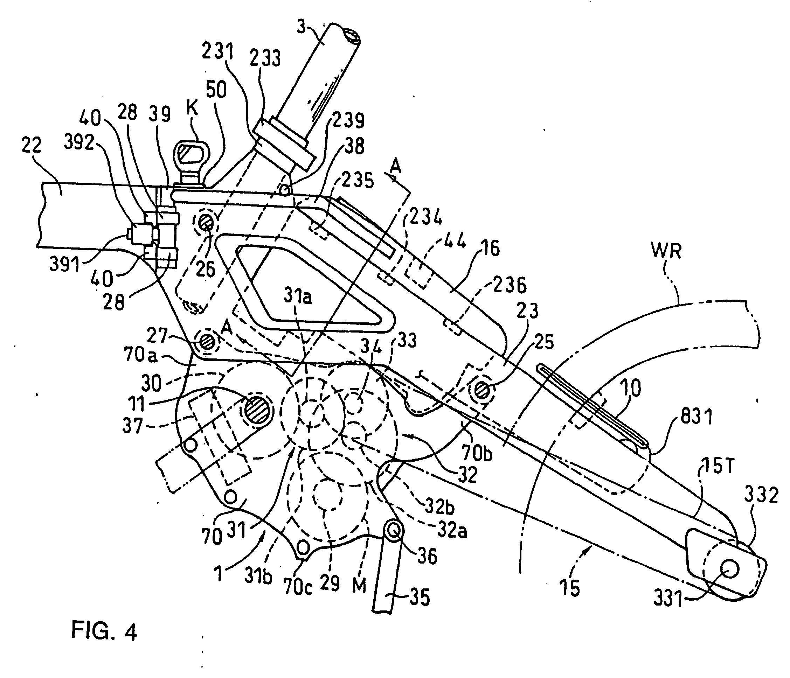

The tread force inputted from the pedals 13 and an assisting force generated by the motor according to the tread force so as to alleviate the tread force are united with each other through a transmission device including gears in the assist unit 1, and an output thereof is taken out as rotation of a driving sprocket not shown (denoted by reference numeral 33 in FIG. 4) which is covered by a sprocket cover 14. A chain 15 is provided for transmitting the rotation of the driving sprocket to the rear wheel WR. Both the front wheel WF and the rear wheel WR have a diameter of 16 inches.

A battery box 16 containing a battery functioning as a power source for the electric motor M and other electrical components is fitted in a space surrounded by the wider portion of the rear frame 23, the connecting portion 231, and the bolt 25 (or a boss supporting the bolt) connecting the rear portions of the left-right pair of rear frames 23 to each other. Mutual connection of the portions of the rear frame 23 split to the left and right sides is conducted by using the bolts 25, 27 and a bolt 26 disposed in the vicinity of a connecting portion of the rear frame 23 to the front frame 22.

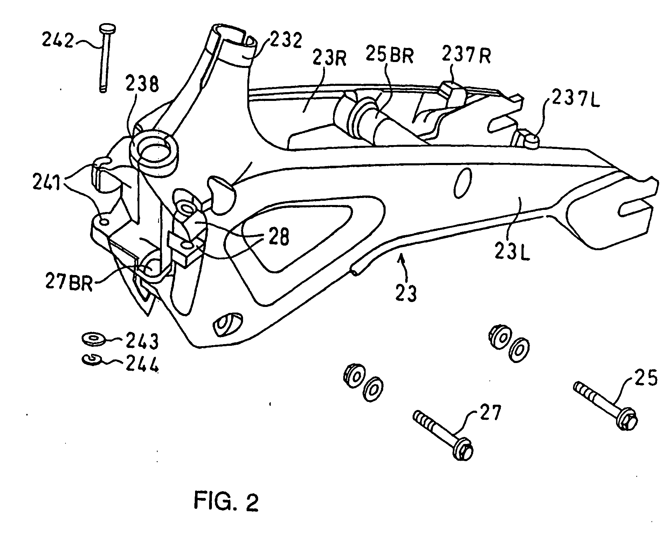

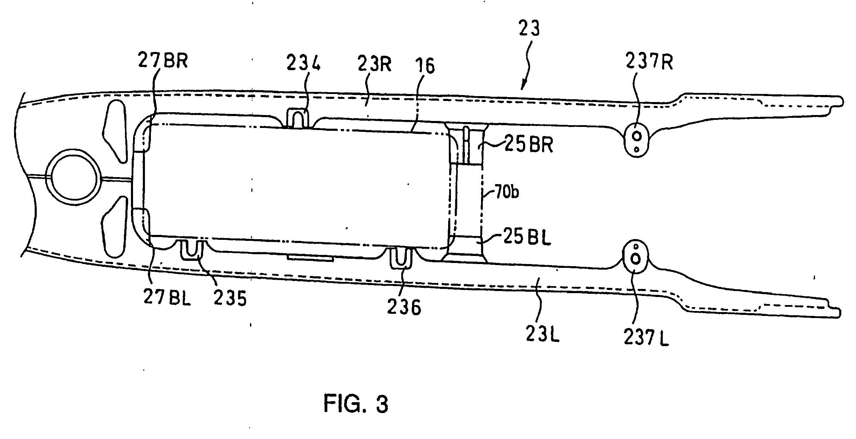

FIG. 2 is a perspective view of the rear frame 23 which does not form part of the present invention, as viewed from the left front side of the vehicle body, and FIG. 3 is a plan view of the same. In the figures, the rear frame 23 includes a left portion 23L and a right portion 23R, and is provided with bosses 25BL, 25BR, 27BL, 27BR through which the bolts 25, 27 can be passed. A fastening portion 26 also is provided with a boss for supporting a knock pin, but the boss is not shown in FIGS. 2 and 3. A hanger portion 70b (See FIG. 4 also) provided at the upper end of the assist unit 1 is sandwichedly disposed between the bosses 25BL, 25BR and between the bosses 27BL, 27BR, and is fitted in the manner of co-fastening with the left portion 23L and the right portion 23R of the rear frame 23.

An upper portion of the rear frame 23 is provided with seats 234, 235, 236 for fitting the battery box 16 and seats 237L, 237R for fitting the rear brake 10. A fitting seat 238 for fitting a power source switch for supplying electric current from the battery to the assist unit 1 and the like is provided at a front portion of the boss 232 for the seat post, of the upper surface of the rear frame 23.

A power source switch 50 operated by a key K is fitted to the seat 238. The battery box 16 is supported by the seats 234, 235, 236, and is contained between the left portion 23L and the right portion 23R of the rear frame 23.

Further, the front end of the rear frame 23, namely, the mating surface for the front frame 22 is provided with a boss 241 which is one part of the hinge 24, and a boss 28 for rotatably supporting a pin (not shown) of the lock device. A pivot pin 242 is inserted into the boss 241, and a washer 243 and a stop ring 244 are fitted to the tip end of the pivot pin 242. A hook (described later) on the side of the front frame 22 which constitutes a part of the hinge is engaged with the pin 242.

FIG. 4 is a side view of a major part showing the fitting position relationships of the rear frame 23 and the battery box 16 and the assist unit 1. These components shown in Fig. 4 do not form part of the present invention. In FIG. 4, hangers 70a, 70b for connecting the assist unit 1 to the rear frame 23 are provided at the periphery of a case main body 70 of the assist unit 1. Bosses are provided respectively at the tip ends of the hangers 70a, 70b, and the bolts 25, 27 penetrate through the bosses. These bolts 25, 27 further penetrate through the boss 25BL of the rear frame 23 and the like to fasten the hangers 70a, 70b to the rear frame 23, whereby the assist unit 1 is hung from the rear frame 23.

Thus, a fixing portion of the assist unit 1 to the rear frame 23 and the fastening portion of the left and right split portions of the rear frame 23 are provided collectively at one location, whereby the number of component parts can be reduced, a space for providing the fixing portion and the fastening portion can be reduced, and a reduction in the size of the rear frame 23 at this portion can be contrived.

A tread force input gear 30 is connected to the crank shaft 11 through a one-way clutch not shown, and the tread force input gear 30 is meshed with a small gear 31a of a composite gear 31. On the other hand, a large gear 32a of an assisting power gear (assist gear) 32 is provided to be meshed with a pinion 29 of the motor M, and a small gear 32b rotated in conjunction with the large gear 32a is meshed with a large gear 31b of the composite gear 31. In addition, the large gear 31b of the composite gear 31 is meshed with an output gear 34 fixed to a shaft of the driving sprocket 33. The case main body 70 and the assist gear 32 of the assist unit 1 are desirably constituted of molded resin products for lightness in weight, and the gear is preferably a helical gear from the viewpoint of calmness and the like.

An axle 331 supporting the rear wheel WR is provided at the rear end of the rear frame 23, and a driven sprocket 332 is connected to the axle 331 through a one-way clutch not shown. The chain 15 is stretched between the driving sprocket 33 and the driven sprocket 332.

Thus, the rotation of the motor M is transmitted to the composite gear 31 through the pinion 29 and the assist gear 32, whereas a tread force inputted from the crank shaft 11 is transmitted to the composite gear 31 through the tread force input gear. Then, the tread force and the assisting power are united with each other by the composite gear 31, and the united power is transmitted to the driving sprocket 33, and is further transmitted to the rear wheel WR through the driven sprocket 332. A controller 37 disposed at a front portion inside the case 70 controls the rotation of the motor M based on a tread force value inputted from a tread force detecting means which is not shown.

A pivot 36 for turnably supporting a main stand 35 consisting of a cast aluminum product is fitted to a rear lower portion of the main body case 70. A projection 70c provided at the lower end of the main body case 70 is a leg portion for self-standing of a rear portion of the bicycle inclusive of the rear frame 23 when the front frame 22 and the rear frame 23 are separated from each other, and when the rear portion is placed on the ground, the rear portion can self-stand with the projection 70c and the rear wheel WR.

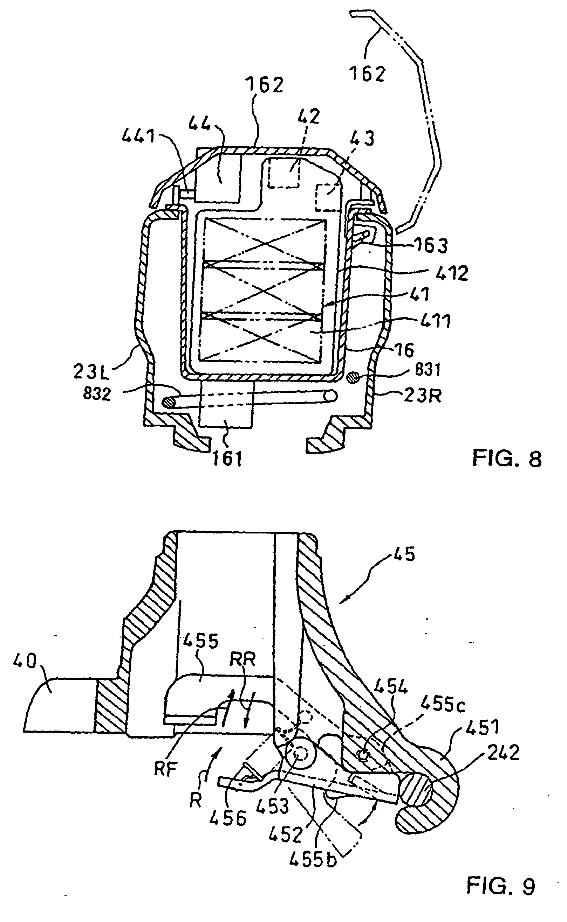

A lock pin 39 having a lock lever 38 is inserted through bosses 28, 28 provided at the front end of the rear frame 23. A bolt 391 is provided so as to be turnable with the lock pin 39 as a center, and a nut 3 is mated with the bolt 391. The bolt 391 is passed through a groove (for detailed shape, see FIGS. 9 to 12) of an engaging portion 40 formed to be projected outward from the front frame 22, and one surface of a nut 392 makes contact with the engaging portion 40 to constitute a fastening surface.

A central portion of the lock pin 39 to which the bolt 391 is fitted is eccentric with respect to the hole of the boss 28, and by turning the lock lever 38, the contact strength between the nut 392 and the engaging portion 40 is adjusted. The maximum of the contact strength between the fastening surface of the nut 392 and the engaging portion 40 can be determined by the amount of turning of the nut 392. In the condition where the lock lever 38 is turned to a position along the rear frame 23 as shown in the figure, the nut 392 and the engaging portion 40 makes strong contact with each other, and the front frame 22 and the rear frame 23 are strongly connected to each other.

On the other hand, when the lock lever 38 is turned in the direction away from the rear frame 23, namely, toward the direction orthogonal to the vehicle body, the nut 392 is deviated in the direction away from the engaging portion 40 (toward the front side of the vehicle body) by a distance according to the amount of eccentricity due to the eccentric shape of the lock pin 39, whereby the contact strength between the nut 392 and the engaging portion 40 is weakened. When the bolt 391 is turned with the lock pin 39 as a shaft under the condition where the contact strength is weakened, the engagement between the nut 392 and the engaging portion 40 can be released, and the front frame 22 and the rear frame 23 can be folded with the hinge 24 as a center.

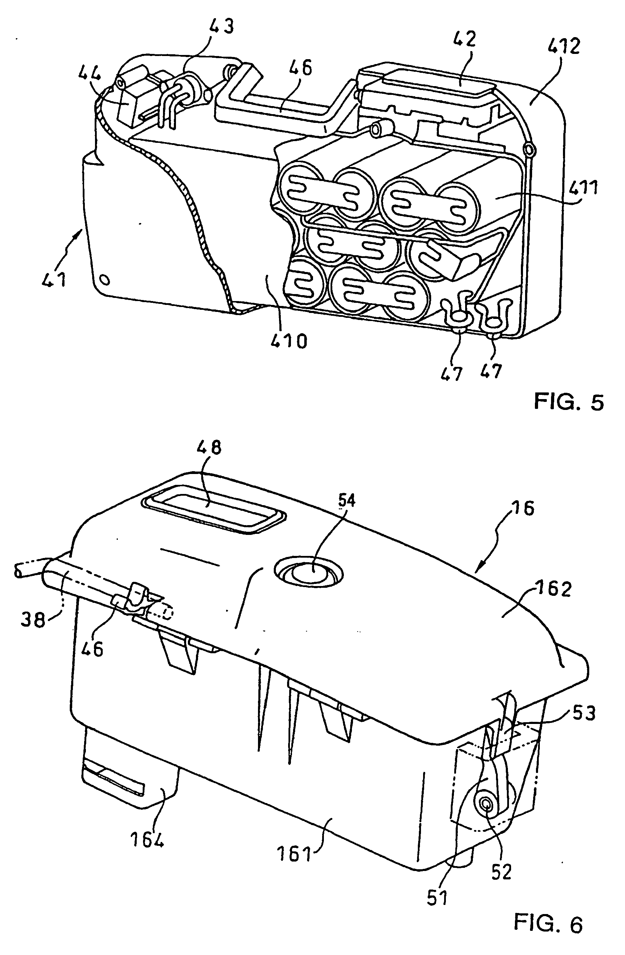

FIG. 5 is a major part broken perspective view showing the structure of the battery which does not form part of the present invention. In the figure, the battery 41 includes a battery main body (for example, 20 nickel-hydrogen cells stacked in the manner of a stack of straw bags) wrapped in a shrink film package 410, and a bisected molded resin case 412 for containing the battery main body 411. The case 412 is provided with an indicator 42 for indicating the residual power of the battery by the number of LEDs turned ON, a connector 43 for charging the battery, and a fuse 44. A handle 46 for transportation and for fitting and detaching of the battery box 16 is turnably fitted to the case 412, and terminals 47, 47 to be connected to the battery main body 411 are provided at a bottom portion of the case 412.

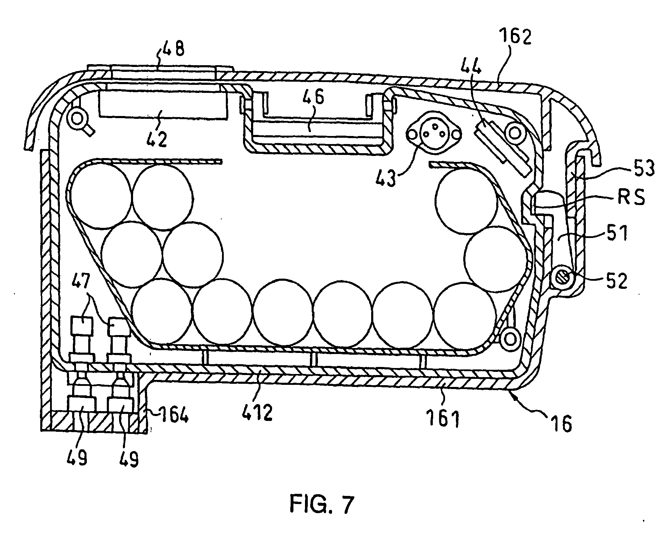

FIG. 6 is a perspective view showing the appearance of the battery box 16, FIG. 7 is a sectional side view, and FIG. 8 is a sectional view taken along line A-A of FIG. 4, showing the battery box 16 contained in the rear frame 23. These components shown in Fig. 6 to 8 do not form part of the present invention. In these figures, the battery box 16 is supported by the seats 234, 235, 236, is so disposed that its longitudinal direction coincides with the front-rear direction of the vehicle body, and is contained between the left portion 23L and the right portion 23R of the rear frame 23. The battery box 16 includes a box main body 161 opened on the upper side so that the battery 41 can be fitted and detached through the upper side, and a lid 162 covering the open upper side. The lid 162 is turnably fitted to the box main body 161 by use of a hinge 163 so that it can be swirled and opened in a side direction of the vehicle body. The two dotted chain line in FIG. 8 shows the condition where the lid 162 is opened. With the box main body 161 so disposed that its longitudinal direction coincides with the front-rear direction of the vehicle body, the frontage of the open upper side is larger as compared with the case where the longitudinal direction is roughly perpendicular to the front-rear direction, so that fitting and detaching of the battery 41 is facilitated.

The lid 162 is provided with a window 48 so that the indicator 42 can be looked through, and is provided with a key device 54. The key device 54 has a claw 541 which can be let in and out by turning a key (preferably used in common with the key for operating the power source switch), and the claw 541 is engaged with the upper end of the box main body 161, whereby locking is achieved.

The battery 41 is contained in the box main body 161, and a terminal box 164 is provided at a bottom portion of the box main body 161. Terminals 49, 49 to be connected to the terminals 47, 47 on the side of the battery 41 are contained in the terminal box 164. The terminals 49, 49 are connected to the controller 37 through a cable not shown. At an upper portion of the box main boxy 161, a U-shaped member 46 is provided so as to protrude sideways from a cutout formed at an edge of the lid 162. The U-shaped member 46 is used as a receiving means for holding the lock lever 38 at a position along the rear frame 23.

A lock arm 51 for holding the battery 41 in the battery box 16 is provided at a portion on the rear side of the vehicle body, of the box main body 161. The lock arm 51 is pivotally supported on the box main boxy 161 by use of a pin 52 so as to be capable of tilting in the front-rear direction of the vehicle body. The box main body 161 is double-walled at a portion where the lock arm 51 is disposed, and the lock arm 51 is contained in the double wall. The lock arm 51 extends upward from the pin 52, and its tip end fronts on the inside of the box main body 161 through an inside wall at a double wall portion. The position and shape of the lock arm 51 are so set that its tip end protruding to the side of the battery 41 is fitted in a recessed portion RS of the case 412 of the battery 41.

A drooping piece 53 is fitted to or formed integrally with an edge on the rear side of the vehicle body, of the lid 162. The position and shape of the drooping piece 53 are so set that it is inserted between the back (a surface on the rear side of the vehicle body) of the lock arm 51 and an outside wall of the double wall to apply a pressing force to the back in the condition where the lid 162 is closed, and a space for allowing the lock arm 51 to tilt in the direction of the outside wall is generated in the condition where the lid 162 is opened.

In FIG. 8, of the wires 831, 832 disposed through a lower portion of the battery box 16, the speed change gear wire 831 extends rearwards in a space surrounded by the rear frame 23 along the right portion 23R of the rear frame 23, whereas the rear brake wire 832 is deviated to the side of the left portion 23L of the rear frame 23 at its intermediate portion and extends rearwards along the left portion 23L.

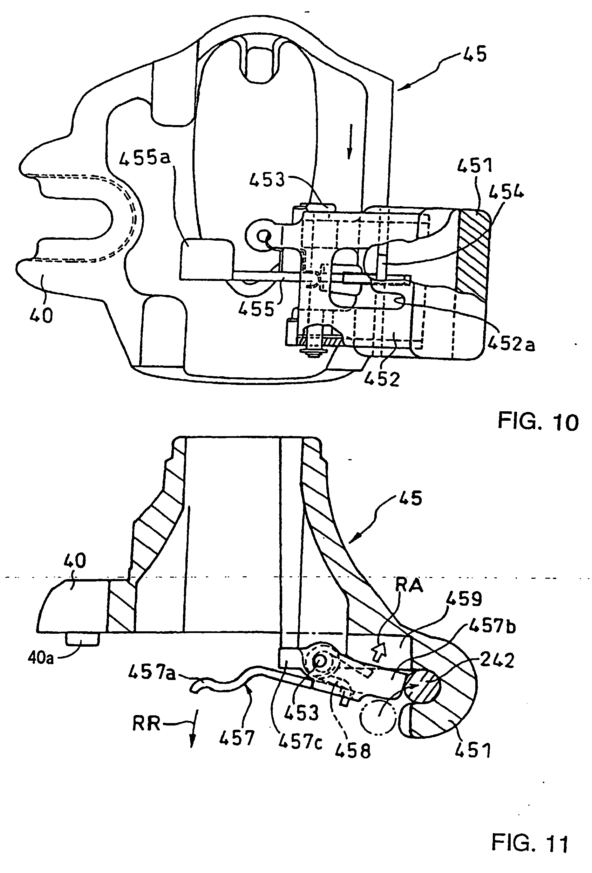

Next, the hinge 24, which does not form part of the present invention, for connecting the front frame 22 and the rear frame 23 will be described in detail. FIG. 9 is a sectional plan view of a rear end portion of the front frame 22 including the hinge 24, and FIG. 10 is a front view (a view from the rear side of the vehicle body) of the same. The rear end portion can be constituted of a rear end component (hereinafter referred to as "end block") integrated by welding to a pipe-shaped component constituting the front frame 22. In both figures, the end block 45 is provided with a hook 451, and the size and position of the hook 451 are so set that it is fitted between the bosses 241, 241 provided on the rear frame 23 and can be engaged with the pivot pin 242.

A lock plate 452 is provided so as to shut off an opening portion (cutout portion) of the U-shaped hook 451. The lock plate 452 is pivotally supported on the end block 45 by a pin 453. Further, the end block 45 is provided with an operating lever 455 pivotally supported by a spring pin 454. The operating lever 455 includes an operating portion 455a onto which a finger is pressed, and a hook 455b. The operating lever 455 is connected to the lock plate 452 by a tension spring 456, whereas the hook 455b fronts on the face side of the lock plate 452, namely, on the side of the rear frame 23 from a cutout window 452a formed in the lock plate 452 and is engaged with the frame of the cutout window 452a. With the hook 455b engaged with the lock plate 452, the turning of the lock plate 452 in the direction of arrow R is restricted although the tension spring 456 is acting. The operating lever 455 has a contact portion 455c making contact with the end block 45 in the vicinity of the pivotal support portion, and the operating lever 455 is inhibited from turning in the direction of arrow RR from the position shown in the figure.

With this constitution, the opening portion of the hook 451 is shut off by a tip end portion of the lock plate 452, so that the pivot pin 242 engaged with the hook 451 cannot escape from the hook 451. Therefore, even when the lock device operated by the lock lever 38 is released, the vehicle body frame (consisting of the front frame and the rear frame) can only be folded with the pivot pin 242 as a center.

To separate the vehicle body frame into the front frame 22 and the rear frame 23 after folding, the operating portion 455a of the operating lever 455 is pushed into the depth (direction of arrow RF) of the end block 45. Consequently, the operating lever 455 is turned with the pin 454 as a center, and the lock plate 452 is turned with the pin 453 as a center, whereby the opening portion of the hook 451 is opened. Therefore, the pivot pin 242 can escape from the hook 451, and the vehicle body frame can be completely separated at the connecting portion between the front frame 22 and the rear frame 23.

As a result of the turning of the operating lever 455 and the lock plate 452, the engagement between the hook 455b of the operating lever 455 and the lock plate 452 is released, so that the opened condition of the opening portion is maintained after the pressing on the operating lever 455 is stopped. Therefore, the operation of pressing the operating lever 455 and the work of separating the vehicle body frame can easily be carried out stepwise by use of both hands.

To re-assemble the separated vehicle body frame, the pivot pin 242 is hooked on the hook 451, and the lock plate 452 is pressed in to the side of the hook 451 to engage the hook 456b of the operating lever 455 and the lock plate 452. By this operation, the opening portion of the hook 451 is shut off. Subsequently, mating surfaces of the front frame 22 and the rear frame 23 are faced to each other, the nut 392 of the lock device shown in FIG. 4 is hooked on the engaging portion 40, and the lock lever 38 is turned to a position along the rear frame 23, thereby locking.

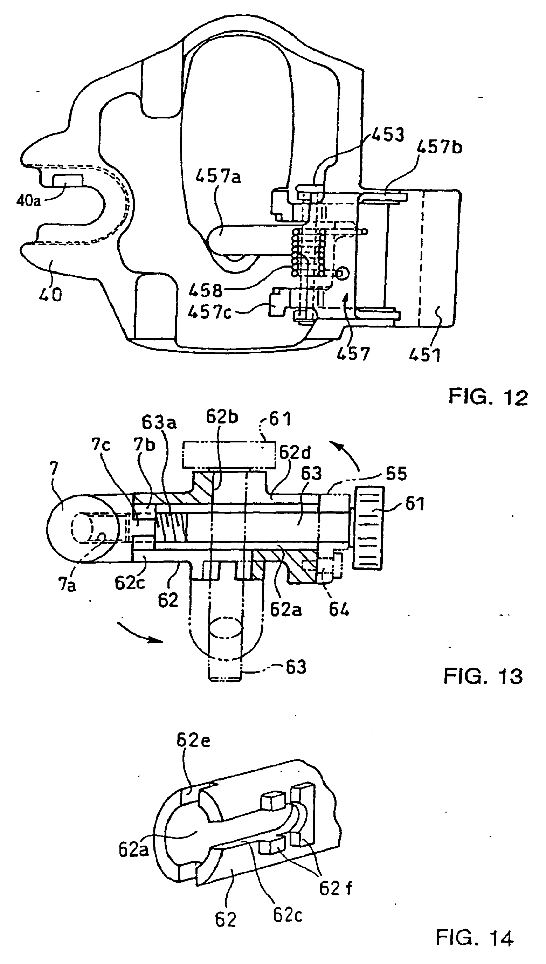

Next, a modified embodiment of the hinge 24 will be described which does not form part of the present invention either. FIG. 11 is a sectional plan view of a rear end portion of the front frame 22 according to the modified embodiment of the hinge 24, and FIG. 12 is a front view of the same, wherein the same reference numerals as those in FIGS. 9 and 10 denote the same or equivalent portions. In the figures, the pivot pin 242 fixed on the side of the rear frame 23 is engaged with the hook 451, and a lock plate 457 is provided at a position for shutting off the opening portion (cutout portion) of the hook 451 so that the pivot pin 242 cannot escape. The lock plate 457 includes an operating portion 457a on which a finger can be hooked, and a lock portion 457b for shutting off the cutout portion, and is pivotally supported on the end block 45 through a pin 453. A spring (torsion coil spring) 458 is engaged with the lock plate 457 so that a force is exerted in the direction for bringing the operating portion 457a toward the end block 45, namely, in the direction for spacing the lock portion 457b away from the end block 45. Here, the rear end of the lock portion 457b, namely, an end portion 452c on the side of the operating portion 457a makes contact with an end face of the end block 45, so that the lock plate 457 cannot be turned away from the end block 45 beyond the position where the lock portion 457b is opposed to the cutout portion.

On the other hand, the end block 45 is provided with an escape portion (recessed portion) 459 so that the lock portion 457b can be turned in the direction (arrow RA) toward the end block 45. The depth of the escape portion 459 is so set that the lock portion 457b escapes to the side of the end block 45 to open the cutout portion of the hook 451.

With this constitution, the lock plate 457 is urged by the spring 458 and the opening portion of the hook 451 is shut off by the lock portion 457b, so that the pivot pin 242 cannot escape from the hook 451. Therefore, only releasing the lock device operated by the lock lever 38 results in that the vehicle body frame can only be folded with the pivot pin 242 as a center.

To separate the vehicle body frame into the front frame 22 and the rear frame 23 after folding, a finger is hooked on the operating portion 457a of the lock plate 457, and the operating portion 457a is pulled in the direction (direction of arrow RR) away from the end block 45. Consequently, the lock portion 457b is retracted into the escape portion 459, and the opening portion of the hook 451 is opened. Therefore, the pivot pin 242 can escape from the hook 451, and the vehicle body frame can be completely separated at the connecting portion between the front frame 22 and the rear frame 23.

To re-assemble the separated vehicle body frame, the pivot pin 242 is pressed against the lock portion 457b so as to retract the lock portion 457b into the escape portion 459. When the pivot pin 242 is contained in the hook 451, the pressing force of the pivot pin 242 onto the lock portion 457b is released. As a result, the lock portion 457b is turned to the opposite side of arrow RA by the urging force of the spring 453, and the opening portion of the hook 451 is shut off.

A surface of the end block 45 faced to the rear frame 23 is provided with a projected portion 40a adjacently to the groove of the engaging portion 40. The projected portion 40a is provided at a position for engagement with a vehicle body right side wall between the bosses 28 provided at a front portion of the rear frame 23. The projected portion 40a prevents the end block 45 from being staggered to the right side of the vehicle body, and so acts that the pivot pin 242 is not disengaged from the hook 451 even when a trouble is generated in the lock plate 457 (anti-lock condition).

In the above embodiment of the hinge 24, the pivot pin 242 is provided on the side of the rear frame 23, while the hook 451 for engagement with the pivot pin 242 and the lock device including the lock plates 452, 457, the operating lever 455 and the like are provided on the side of the front frame 22. However, this arrangement may be reversed; namely, the pivot pin 242 may be provided on the side of the front frame 22, and the lock plate 452 and the like may be provided on the side of the rear frame 23.

Next, the joint 6 for connecting the handle post 7 to the front fork 5 will be described in detail. FIG. 13 is a sectional plan view of the joint 6, and FIG. 14 is a perspective view of a major part. A joint block 62 provided at a top portion of the front fork 5 is provided with a hole 62a through which a shaft 63 of a knob 61 can penetrate horizontally, and a hole 62b orthogonal to the hole 62a. The hole 62a and the hole 62b are provided with cutout grooves 62c, 62d so that the shaft 63 can be turned in a horizontal plane inside the joint block 62.

A male screw 63a formed at the tip end of the shaft 63 is mated with a female screw 7a formed at the lower end of the handle post 7. The handle post 7 is provided at its lower end with a hub 7b fitted to an end face of the joint block 62, and a projected portion 7c to be engaged with a recessed portion 62e formed at an end face of the joint block 62 to determine a direction relative to the joint block 62. The hub 7b of the handle post 7 is fitted to the periphery of a terminal end portion of the cutout groove 62c, and a projected portion 62f having a vertical groove for engagement with the projected portion 7c is provided at the periphery. A stopper 55 turnably supported by a pin 64 is provided at a vehicle body rear side end portion of the joint block 62.

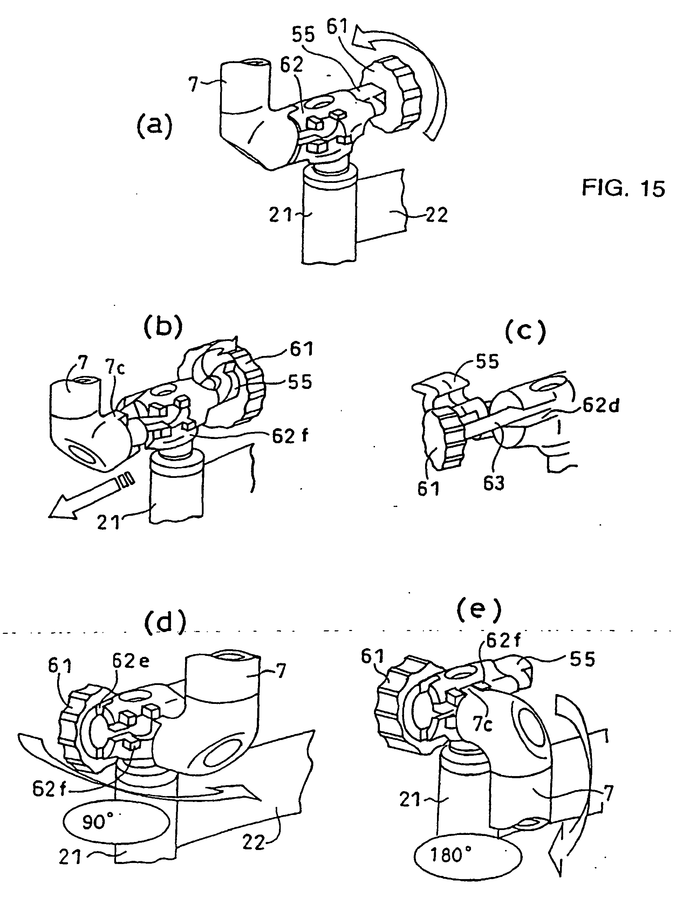

An operation of folding the handle post 7 will be described. FIGS. 15 are perspective views of the joint 6 for showing the procedures of folding. FIG. 15(a) shows the joint 6 at the time of use of the motor-assisted bicycle. In this condition, the handle post 7 rises vertically upwards, and the lower end of the handle post 7 is fitted to the joint block 62. To fold the handle post 7, first, the knob 61 is turned to loosen the fastening.

Subsequently, as shown in FIG. 15(b), the stopper 55 is opened upwards with the pin 64 as a center, and the knob 61 is urged to the front side of the vehicle body. With the stopper 55 opened, a large space is created between the knob 61 and the joint block 62, as shown in FIG. 15(c) viewed from the side of the knob 61, and the knob 61 can be displaced to the front side of the vehicle body. With the knob 61 displaced to the front side of the vehicle body, the projected portion 7c of the handle post 7 is disengaged from the recessed portion 62e of the joint block 62 (See FIG. 15(b)). As a result, the shaft 63 can be turned counterclockwise in plan view (in the left direction with respect to the forward direction of the vehicle body). FIG. 15(d) shows the condition where the shaft 63 is turned by 90 degrees.

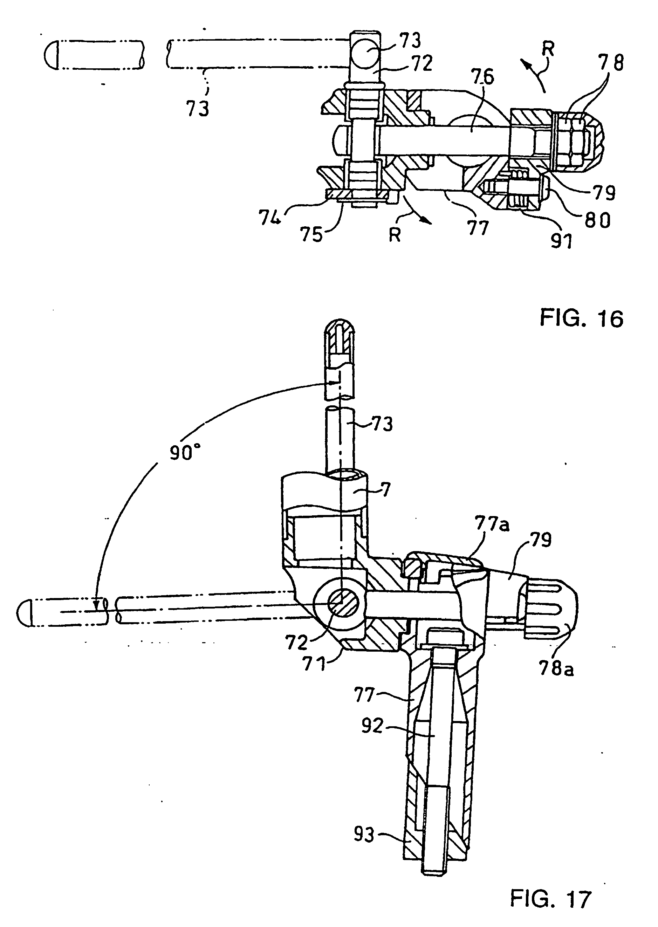

A modified embodiment of the joint 6 will be described. FIG. 16 is a horizontal sectional view of a major part of the handle post including the joint 6 according to the modified embodiment, and FIG. 17 is a vertical sectional view of the same. In both figures, at a lower end portion 71 of the handle post (first portion) 7, a shaft 72 (eccentric shaft) for lock having both end portions supported by the lower end portion 71 and a central portion eccentric relative to the both end portions penetrates horizontally. A lever 73 for turning the shaft 72 is connected to a protruding end of the shaft 72. A stop ring 75 is fitted to the other end of the shaft 72 through a washer 74, whereby the shaft 72 is prevented from escaping from the lower end portion 71 of the handle post 7.

In addition, a bolt (shaft means) 76 extending in a direction orthogonal to the shaft 72 penetrates through the handle post 7, and one end of the bolt 76 is turnably engaged with the central portion, namely, an eccentric portion of the shaft 72. Further, the bolt 76 penetrates through a stem 77 as a second portion of the handle post fitted to the head pipe 21. A nut (double nut) 78 is mated with a protruding portion of the bolt 76 penetrating through the stem 77. A cap 78a made of a resin material is fitted onto the nut 78. A stopper (restricting means) 79 turnably supported by a bolt 80 erected on the stem 77 is intermediately disposed between the nut 78 and the stem 77. The stopper 79 is normally urged in the direction for engagement with the bolt 76 by a coil spring 91 provided around a bolt 90.

A head portion, namely, an upper portion of the stem 77 is provided with grooves corresponding to the cutout grooves 62c, 62d so that the bolt 76 can be horizontally turned in the direction of arrow R by a predetermined angle. Details will be described later. A bolt 92 extending along the longitudinal direction of the stem 77 is provided, and a nut 93 is mated with a tip end portion of the bolt 92 protruding from the stem 77. A cap 77a is fitted onto a top portion of the stem 77.

Contact surfaces of the lower end portion of the handle post 7 and the stem 77 have recessed and projected shapes, and mutual engagement thereof is maintained at normal time. The lever 73 can be turned by 90 degrees as shown in the figure, and, by this turning, the position of engagement of the bolt 76 with the eccentric portion of the shaft 72 is varied, and engagement strength between the lower end portion 71 of the handle post 7 and the stem 77 is varied. Positional relationship is so set that the engagement strength is maximized when the lever 73 is set in a position along the handle post 7.

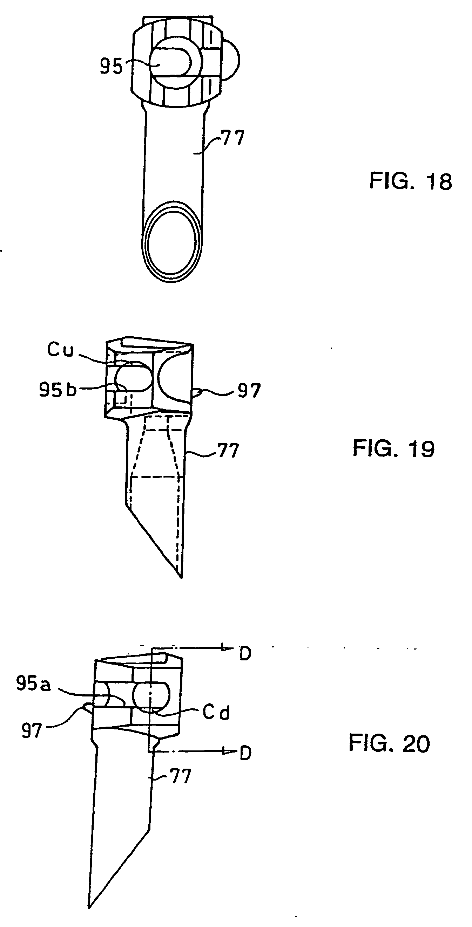

FIG. 18 is a front view (view from the front side of the vehicle body) of the stem 77, FIG. 19 is a left side view, and FIG. 20 is a right sectional view. As shown in the figures, a head portion of the stem 77 is provided with a void 95 through which the bolt 76 penetrates. The void 95 includes grooves or cutouts 95a, 95b so expanded that the bolt 76 can be turned by at least 90 degrees from the normal-use position, counterclockwise in plane view, namely, in the direction of arrow R (See FIG. 16). With this construction, the bolt 76 can be freely turned from the normal-use position, namely, the position along the forward direction of the vehicle to the direction orthogonal to the forward direction of the vehicle, or vice versa. At a position on the rear side of the vehicle body of the stem 77, a projection 97 for determining the limit of turning of the stopper 79 is provided.

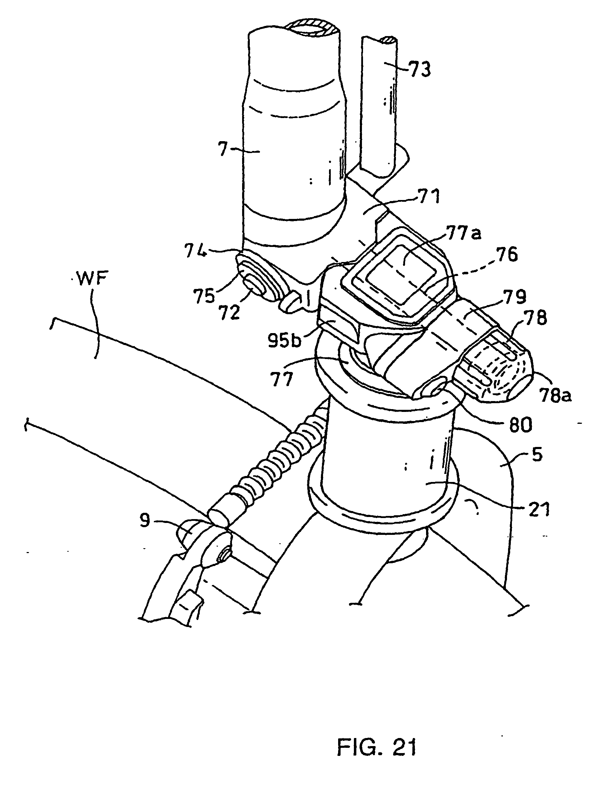

Next, the procedures of folding up the handle post 7 at the joint 6 according to the modified embodiment will be described. FIG. 21 is a perspective view of the joint 6 in a use condition. As shown in the figure, in the normal-use position, the axial direction of the bolt 76 penetrating through the stem 77 coincides with the forward direction of the vehicle, and is parallel to the plane of the front wheel WF. The lever 73 rises along the handle post 7, and the projected portion 71a of the lower end portion 71 of the handle post 7 and the recessed and projected portion 77b of the stem 77 are in firm contact engagement with each other. Therefore, the turning of the handle post 7 by operating the handle 8 is securely transmitted to the front wheel WF through the front fork 5, whereby steering is controlled.

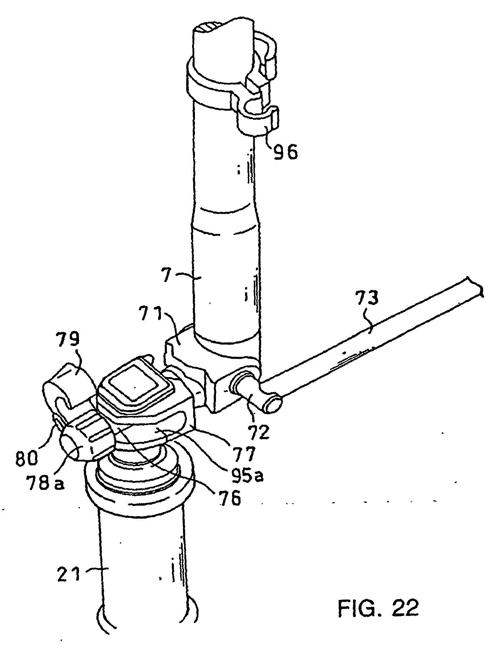

From this normal-use condition, the handle post 7 is folded up. FIGS. 22 to 25 are perspective views of a major part of the bicycle showing the procedures of folding the handle post 7. First, in FIG. 22, the lever 73 is tilted from the position along the handle post 7 to a substantially horizontal position. With the lever 73 turned to this position, the engagement between the lower portion 71 and the head portion of the stem 77 is loosened. Then, the force restricting the turning (lift-up) of the stopper 79 between the nut 78 and the stem 77 is also loosened, so that the stopper 79 can be lifted up.

In FIG. 22, the stopper 79 is turned with the bolt 80 as a pivot, and the bolt 76 is deviated so as to plug the gap generated as a result of the turning. In this manner, the engagement between the lower end portion 71 of the handle post 7 and the stem 77 is released. To hold the tip end of the lever 73, a holder 96 is fitted to the handle post 7.

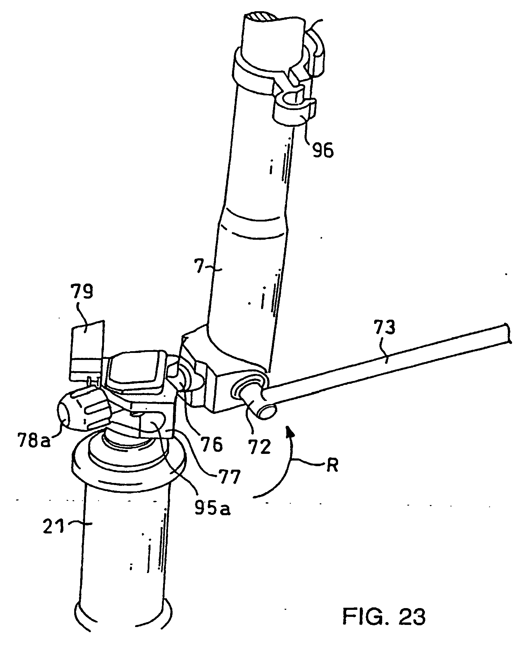

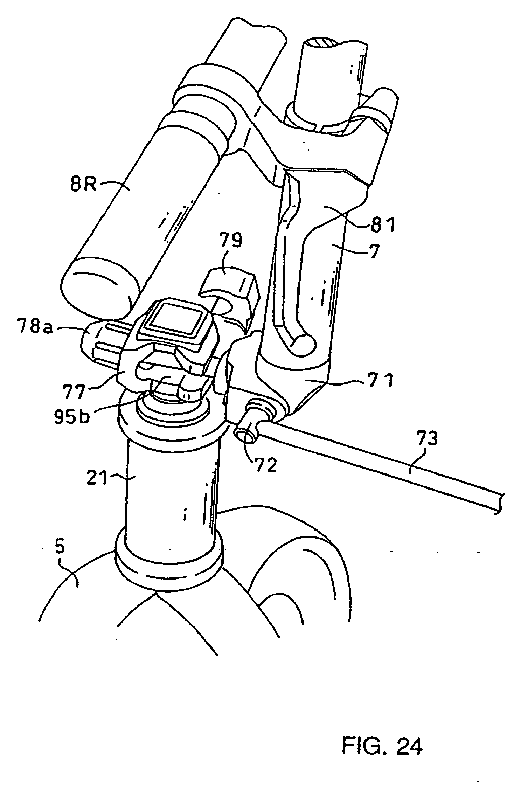

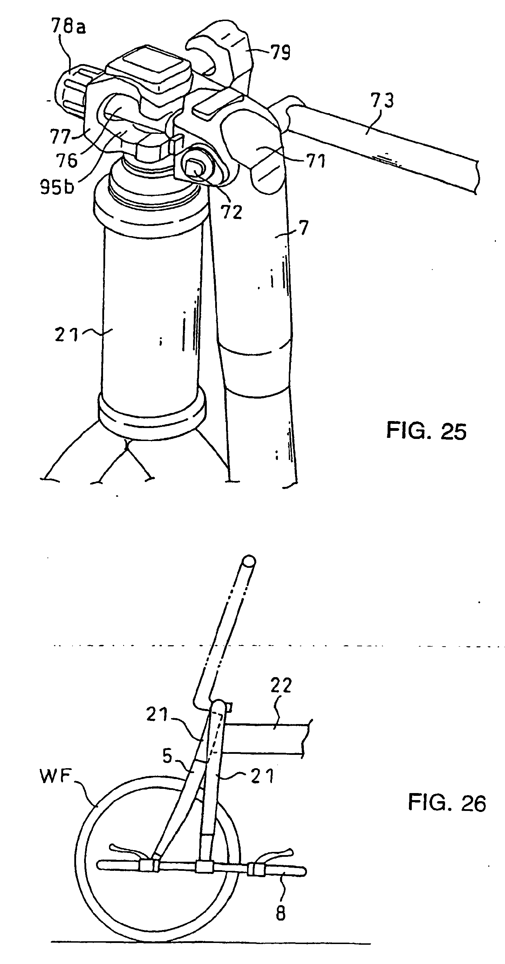

Subsequently, in FIG. 23, the bolt 76 is turned in the direction of arrow R along the grooves 95a, 95b, and the handle post 7 starts to be turned to the left side of the vehicle body. Then, in FIG. 24, the handle post 7 is already turned by about 90 degrees to the left side of the vehicle body. Reference numeral 8R denotes a left grip of the handle 8, and a brake lever 81 is mounted in the vicinity of the left grip 8R. Finally, in FIG. 25, the handle post 7 is already turned to the left side of the vehicle body, and the handle post 7 is folded by about 180 degrees with the bolt 76 as a center.

FIG. 26 is a side view of the vehicle body where the handle post 7 is folded up. With the handle post 7 folded up as shown in the figure, the handle 8 is moved to a position substantially along the front wheel WF.

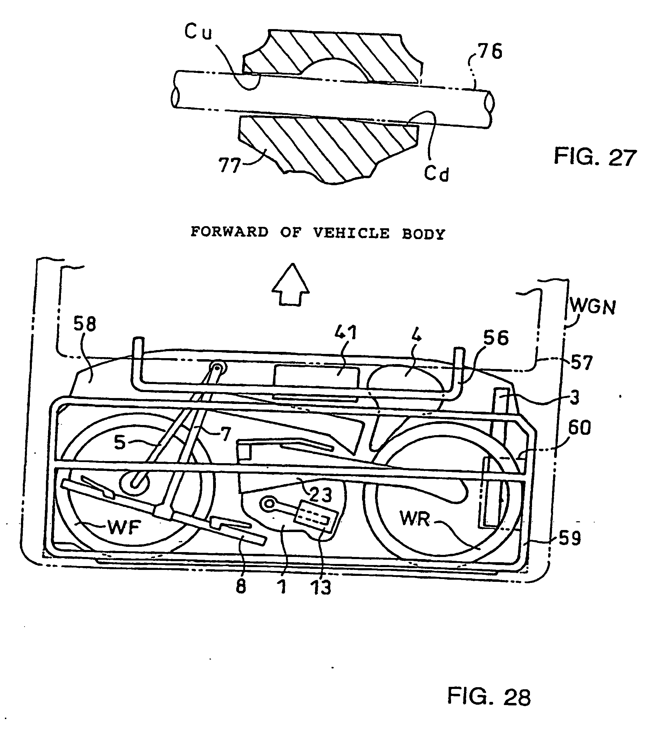

When the handle 8 is turned with the bolt 76 as a center to the position along the front wheel WF, the handle post 7 and an axle projecting in the vehicle width direction from the center of the front wheel WF may in some cases interfere with each other. In view of such a case, it is preferable that the handle post 7 can be folded up without such interference with the projecting portion of the axle. FIG. 27 is a sectional view taken along line D-D of FIG. 20. As shown in the figure, to ensure that the bolt 76 can fall at the position where the handle post 7 is already turned to the left side of the vehicle body, surfaces of the grooves 95a, 95b with which the bolt 76 comes into contact in the condition of FIGS. 24 and 25 are provided with chamfered portions Cu, Cd, where clearance is generated between the bolt 76 and the grooves 95a, 95b. The chamfered portions Cu, Cd are shown also in FIGS. 19 and 20. With the bolt 76 thus tilted, the handle post 7 can be folded up in such a condition as to avoid the interference with the axle of the front wheel WF projecting in the vehicle width direction. While the procedures of folding have been described, re-assembly is naturally conducted in the reverse procedures.

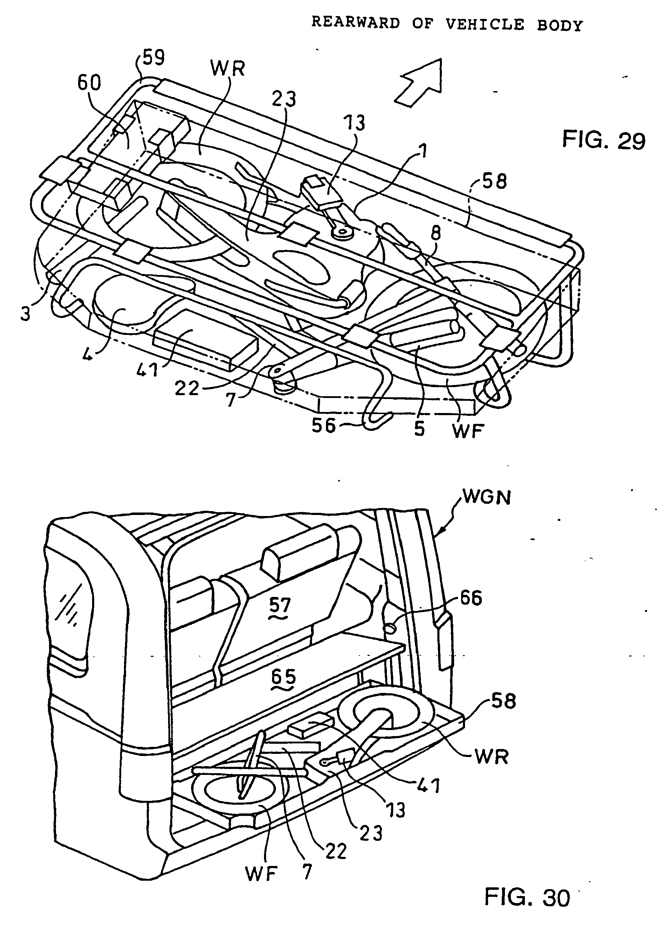

An example of transporting the vehicle body separated as above will be described. FIG. 28 is a plan view showing a tray capable of being drawn into and out of a rear portion of a four-wheel automobile (here, a wagon type vehicle or an RV car is presumed), together with a motor-assisted bicycle contained in the tray, and FIG. 29 is a perspective view of the same as viewed from the front side of the automobile. In both figures, a front frame 56 is fixed on the lower side of a rear seat 57 in the automobile WGN, and determines the limit of front position of the tray 58 in the automobile WGN. An upper frame 59 is fixed in the automobile WGN on the rear side of the front frame 56, and supports shelf plates (not shown) thereon. The tray 58, preferably made of a resin material, is disposed to be slidable in the front-rear direction of the automobile while being guided along rails not shown, in the space surrounded by the front frame 56 and the upper frame 59. A charger 60 for the battery 41 is held on the left side of the upper frame 59.

Referring to FIGS. 28 and 29, the procedures of mounting the motor-assisted bicycle into the automobile for transportation will be described. The tray 58 is drawn out to the rear side of the automobile, for easy mounting of the motor-assisted bicycle. With the tray thus drawn out, first, the lid 162 of the battery box 16 is opened, the battery 41 is detached from the motor-assisted bicycle, and is contained at a front central portion in the tray 58. Next, the clamper 233 is loosened, the seat post 3 is drawn out of the rear frame 23, and the seat post 3 and the seat 4 are separated from each other. The seat 4 is contained at a right side of the battery 41, and the seat post 3 is contained at a right corner in the tray 58.

Subsequently, the vehicle body frame is separated. Prior to the separation, the knob 61 of the joint 6 is operated, and the handle post 7 is folded up at the joint 6. Then, the lock lever 38 is operated to release the lock of the connecting portion between the front frame 22 and the rear frame 23, and the vehicle body frame is folded up with the pivot pin 242 as a center. After folding, the pivot pin 242 is made to escape from the hook 451 of the front frame 22 by pushing the operating lever 455 (the example of FIG. 9) or by pulling the lock plate 457 (the example of FIG. 11), and the vehicle body frame is separated. The front frame 22, the handle post 7, the handle 8, the front fork 5, and the front wheel WF are integrally contained on the left side in the tray 58. On the other hand, the rear frame 23, the assist unit 1, and the rear wheel WR are integrally contained on the right side in the tray 58, after folding up the pedals 13.

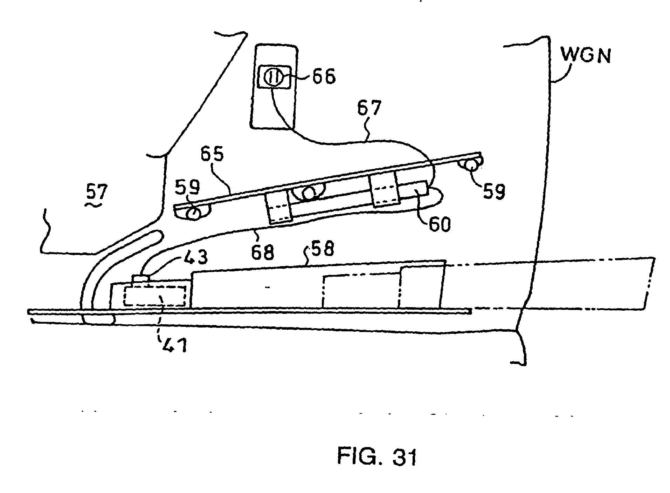

FIG. 30 is a perspective view of a rear portion of the automobile WGN, and FIG. 31 is a sectional view of a major part of the same. As shown in FIG. 30, in the condition where the tray 58 is drawn out, most of the motor-assisted bicycle is located on the rear side of the automobile outside the range covered by the shelf plate 65, so that the user can easily load the motor-assisted bicycle onto and down from the automobile without being interfered by the shelf plate 65.

In addition, a plug socket 66 for AC 100 volts is provided on an interior side wall of the automobile WGN. As shown in FIG. 31, power source is supplied from the plug socket 66 to the charger 60 mounted on the back side of the shelf plate 65 through a cord 67, and a direct current of a predetermined voltage rectified by the charger 60 is supplied to the battery 41 through a cord 68. The cord 68 and the battery 41 are connected to each other through a connector 43.

By utilizing the AC plug socket 66 in this manner, for example, by effective use of the time until reaching the destination such as a resort, the battery 41 can be charged by a generator driven by the engine of the automobile WGN.

While the motor-assisted bicycle to which the present invention is applied has been described, the present invention is not limited to the motor-assisted bicycle, and can generally and widely be applied to bicycles in which it is desired to fold the handle portion from the handle post.

The invention allows to fold up a handle in a small space.
To achieve this, a bolt 76 is engaged with an eccentric shaft 72 provided at a lower end portion 71 of a handle post 7, and penetrates through a stem supported on a head pipe 21. A nut 78 is mated with an end portion of the bolt 76, and a stopper 79 with a bolt 80 as a pivot is intermediately disposed between the nut 78 and the stem 77. At the time of folding, a lever 73 attached to the eccentric shaft 72 is turned to deviate the bolt 76, thereby loosening the tension of members 71, 77, 79, 78. Next, the stopper 79 is raised, and the handle post 7 is rotated to the left side with the stem 77 as a shaft. After the left rotation by 90 degrees to set the handle along the vehicle body, the handle is turned in a substantially vertical plane along the vehicle body with the bolt 76 as a shaft to move the handle to the lower side, thereby finishing the folding.

## Claims

1. Bicycle comprising a head pipe (21) and a steering device having a handle(8) extending under normal circumstances in the width direction of the bicycle, and a handle post (7) supporting the handle (8) and being turnably supported within the head pipe (21), wherein the handle post (7) comprises:
- a first portion (71) connected to the handle (8),
- a second portion (77) supported by the head pipe (21) at a position deviated from the first portion (71) in a deviating direction, the deviating direction under normal circumstances being oriented towards the rear side of the bicycle, and
- a joint (6) for foldably connecting the first and second portions (71, 77),
**characterized in that**
the joint (6) is so constituted that the first portion (71) is freely turnable with respect to the second portion (77) around the pivotal axis of the head pipe (21) and is turnable in a plane orthogonal to the deviating direction of the second portion (77).

2. Bicycle as set forth in claim 1, wherein said joint (6) comprises
a shaft means (63; 76) extending in said deviating direction from said first portion (71) of said handle post (7), and
a fastening means (61; 63a, 72) for connecting said first and second portions by fastening and fixing said shaft means (63; 76) to said second portion (77).

3. Bicycle as set forth in claim 2, wherein
said first and second portions (71, 77) are engaged with each other at recessed and projected portions (62e, 7c) thereof, and the engagement and disengagement of said recessed and projected portions are conducted by moving said shaft means (63) in said deviating direction, and
turnings of said first portion (71) around the pivotal axis of the head pipe (21) and in a plane orthogonal to the deviating direction are permitted in the condition where said recessed and projected portions (62e, 7c) are disengaged from each other.

4. Bicycle as set forth in claim 2 or 3, wherein said fastening means is so constructed that said shaft means (63) is constituted of a bolt having a screw portion (63a) screwed into said first portion (71, 7a), and a knob (61) engaged with said second portion (77, 62).

5. Bicycle as set forth in claim 2 or 3, wherein
said fastening means comprises an eccentric shaft (72) for connecting said shaft means (76) and said first portion (71), and
is so constructed that the connection and disconnection of said first and second portions (71, 77) are conducted by turning said eccentric shaft (72) and thereby moving said shaft means (76) in the longitudinal direction thereof.

6. Bicycle as set forth in any of claims 2 to 5, wherein
a restricting means (79) is provided for restricting the amount of movement of said shaft means (76) in the axial direction, and
disengagement of said recessed and projected portions is permitted by releasing said restricting means (79).

7. Method of folding a steering device of a bicycle, the steering device having a handle (8) extending under normal circumstances in the width
direction of the bicycle, and a handle post (7) supporting the handle (8) and being turnably supported within a head pipe (21) of the bicycle, wherein the handle post (7) comprises :
- a first portion (71) connected to the handle (8) and
- a second portion (77) supported by the head pipe (21) at a position deviated from the first portion (71) in a deviating direction, the deviating direction under normal circumstances being oriented towards the rear side of the bicycle,
**characterized by** the steps of
- turning the first portion (71) with respect to the second portion (77) around the pivotal axis of the head pipe (21) and
- turning the first portion (71) in a plane orthogonal to the deviating direction of the second portion (77).

8. Method of claim 7, **characterized in that** the steering device further comprises a shaft means (63) extending in said deviating direction from said first portion (71) of said handle post (7) to be engaged with said second portion (77), a screw portion (63a) provided in said shaft means (63), a fastening means (61) for connecting said first and second portions (71, 72) by screwing said screw portion (63a) into said first (71) or second portion, and a restricting means (55) for restricting the amount of movement of said shaft means (63) in the axial direction, and
the method comprises the steps of:
loosening said fastening means (61);
releasing said restricting means (55) and moving said shaft means (63) to thereby disengaging said first portion (71) and said second portion (77), turning said first portion (71) with respect to said second portion (77) around the pivotal axis of the head pipe (21) to thereby setting the extending direction of said handle (8) along the front-rear direction of the bicycle, and
turning said first portion (71) in a plane orthogonal to the deviating direction of said second portion (77) versus the first portion (71) to thereby move said handle (8) to the lower side of the bicycle.

9. Method of claim 7, **characterized in that** the handle post (7) further comprises a shaft means (76) extending in said deviating direction from said first portion (71) of said handle post (7) to be engaged with said second portion (77), a fastening means comprising an eccentric shaft (72) for connecting said shaft means (76) and said first portion (71) and so constructed that connection and disconnection of said first portion (71) and said second portion (77) are conducted by turning said eccentric shaft (72) and thereby moving said shaft means (76) in the longitudinal direction thereof, and a restricting means (79) for restricting the amount of movement of said shaft means (76) in the axial direction, and
that the method comprises the steps of:
turning said eccentric shaft (72) to release the fastening by said fastening means,
releasing said restricting means (79) and moving said shaft means to thereby disengage said first portion (71) and said second portion (72),
turning said first portion (71) with respect to said second portion (77) around the pivotal axis of the head pipe (21) to thereby set the extending direction of said handle along the front-rear direction of the bicycle, and
turning said first portion (71) in a plane orthogonal to the deviating direction of said second portion (77) versus the first portion (71) to move said handle to the lower side of the vehicle body.

## Patentansprüche

1. Fahrrad umfassend ein Kopfrohr (21) und eine Lenkeinrichtung mit einem Lenker (8), der sich unter normalen Umständen in der Breitenrichtung des Fahrrads erstreckt, und einer Lenkersäule (7), die den Lenker (8) trägt und drehbar in dem Kopfrohr (21) getragen ist, wobei die Lenkersäule (7) umfasst:
- einen ersten Abschnitt (71), der mit dem Lenker (8) verbunden ist,
- einen zweiten Abschnitt (77), der von dem Kopfrohr (21) an einer Position getragen ist, die in einer Versatzrichtung von dem ersten Abschnitt (71) versetzt ist, wobei die Versatzrichtung unter normalen Umständen zur Rückseite des Fahrzeugs hin ausgerichtet ist, und
- ein Gelenk (6) zum klappbaren Verbinden des ersten und des zweiten Abschnitts (71, 77),
**dadurch gekennzeichnet, dass**
das Gelenk (6) so konstruiert ist, dass der erste Abschnitt (71) in Bezug auf den zweiten Abschnitt (77) frei um die Drehachse des Kopfrohrs (21) schwenkbar ist und in einer zur Versatzrichtung des zweiten Abschnitts (77) orthogonalen Ebene schwenkbar ist.

2. Fahrrad nach Anspruch 1, wobei das Gelenk (6) umfasst:
ein Schaftelement (63; 76), welches sich in der Versatzrichtung von dem ersten Abschnitt (71) der Lenkersäule (7) erstreckt, und
ein Feststellmittel (61; 63a, 72) zum Verbinden des ersten und des zweiten Abschnitts durch Feststellen und Befestigen des Schaftelements (63; 76) an dem zweiten Abschnitt (77).

3. Fahrrad nach Anspruch 2, wobei
der erste und der zweite Abschnitt (71, 77) miteinander an vertieften von vorspringenden Abschnitten (62e, 7c) derselben in Eingriff stehen und
wobei der Eingriff und das Lösen des Eingriffs der vertieften und vorstehenden Abschnitte durch Bewegen des Schaftelements (63) in der Versatzrichtung ausgeführt werden, und
Schwenkbewegungen des ersten Abschnitts (71) um die Drehachse des Kopfrohrs (21) und in einer zur Versatzrichtung orthogonalen Ebene in einem Zustand zugelassen sind, in welchem die vertieften und
vorstehenden Abschnitte (62e, 7c) außer Eingriff voneinander sind.

4. Fahrrad nach Anspruch 2 oder 3, in welchem das Feststellmittel so konstruiert ist, dass das Schaftelement (63) aus einem Bolzen mit einem in den ersten Abschnitt (71, 7a) eingeschraubten Schraubabschnitt (63a) und einem Knopf (61) in Eingriff mit dem zweiten Abschnitt (77, 62) gebildet ist.

5. Fahrrad nach Anspruch 2 oder 3, wobei
das Feststellmittel einen exzentrischen Schaft (72) zum Verbinden des Schaftelements (76) und des ersten Abschnitts (71) umfasst und
so konstruiert ist, dass die Verbindung und Trennung des ersten und des zweiten Abschnitts (71, 77) ausgeführt wird, indem der exzentrische Schaft (72) geschwenkt wird und **dadurch** das Schaftelement (76) in dessen Längsrichtung bewegt wird.

6. Fahrrad nach irgendeinem der Ansprüche 2 bis 5 wobei
ein Begrenzungsmittel (79) vorgesehen ist, um den Betrag der Bewegung des Schaftelements (76) in der axialen Richtung zu beschränken, und
das Lösen des Eingriffs der vertieften und der vorstehenden Abschnitte durch Lösen des Begrenzungsmittels (79) zugelassen wird.

7. Verfahren zum Zusammenklappen einer Lenkeinrichtung eines Fahrrads, wobei die Lenkeinrichtung einen Lenker (8) aufweist, der sich unter normalen Umständen in der Breitenrichtung des Fahrrads erstreckt, sowie eine Lenkersäule (7) aufweist, die den Lenker (8) trägt und schwenkbar in einem Kopfrohr (21) des Fahrrads getragen ist, wobei die Lenkersäule (7) umfasst:
- einen erfassten Abschnitt (71), der mit dem Lenker (8) verbunden ist, und
- einen zweiten Abschnitt (77), der durch das Kopfrohr (21) an einer Position getragen ist, die von dem ersten Abschnitt (71) in einer Versatzrichtung versetzt ist, wobei die Versatzrichtung unter normalen Umständen zur Rückseite des Fahrrads hin ausgerichtet ist,
**gekennzeichnet durch**
die Schritte:
- Schwenken des ersten Abschnitts (71) in Bezug auf den zweiten Abschnitt (77) um die Drehachse des Kopfrohrs (21) und
- Schwenken des ersten Abschnitts (71) in einer zur Versatzrichtung des zweiten Abschnitts (77) orthogonalen Ebene.

8. Verfahren nach Anspruch 7, **dadurch gekennzeichnet, dass** die Lenkeinrichtung ferner umfasst: ein Schaftelement (63), welches sich in der Versatzrichtung von dem ersten Abschnitt (71) der Lenkersäule (7) aus erstreckt, um in Eingriff mit dem zweiten Abschnitt (77) zu sein, einen Schraubabschnitt (63a), welcher in dem Schaftelement (63) vorgesehen ist, ein Feststellmittel (61) zum Verbinden des ersten und des zweiten Abschnitts (71, 72) durch Einschrauben des Schraubabschnitts (63a) in den ersten (71) oder zweiten Abschnitt, sowie ein Begrenzungsmittel (55) zum Begrenzen des Betrags der Bewegung des Schaftelements (63) in der axialen Richtung, und dass das Verfahren die folgenden Schritte umfasst:
Lockern des Feststellmittels (61),
Lösen des Begrenzungsmittels (55) und Bewegen des Schaftelements (63), um **dadurch** den ersten Abschnitt (71) und den zweiten Abschnitt (77) außer Eingriff zu bringen, Schwenken des ersten Abschnitts (71) in Bezug auf den zweiten Abschnitt (77) um die Drehachse des Kopfrohrs (21), um **dadurch** die Erstreckungsrichtung des Lenkers (8) der Längsrichtung des Fahrrads entlang einzustellen, und
Schwenken des ersten Abschnitts (71) in einer zur Versatzrichtung des zweiten Abschnitts (77) gegenüber dem ersten Abschnitt (71) orthogonalen Ebene, um **dadurch** den Lenker (8) zur unteren Seite des Fahrrads zu bewegen.

9. Verfahren nach Anspruch 7, **dadurch gekennzeichnet, dass** die Lenkersäule (7) ferner umfasst: ein Schaftelement (76), welches sich in der Versatzrichtung von dem ersten Abschnitt (71) der Lenkersäule (7) erstreckt, um mit dem zweiten Abschnitt (77) in Eingriff zu sein, ein Feststellmittel, welches einen exzentrischen Schaft (72) zum Verbinden des Schaftelements (76) und des ersten Abschnitts (71) umfasst, und welches so konstruiert ist, dass eine Verbindung und eine Trennung des ersten Abschnitts (71) und des zweiten Abschnitts (77) ausgeführt wird, indem der exzentrische Schaft (72) geschwenkt wird und **dadurch** das Schaftelement (76) in seiner Längsrichtung bewegt wird, sowie ein Begrenzungsmittel (79) zum Begrenzen des Betrags der Bewegung des Schaftelements (76) in der axialen Richtung, und
dass das Verfahren die folgenden Schritte umfasst:
Schwenken des exzentrischen Schafts (72), um den festgestellten Zustand durch das Feststellmittel zu lösen,
Lösen des Begrenzungsmittels (79) und Bewegen des Schaftelements, um **dadurch** den ersten Abschnitt (71) und den zweiten Abschnitt (72) außer Eingriff zu bringen,
Schwenken des ersten Abschnitts (71) in Bezug auf den zweiten Abschnitt (77) um die Drehachse des Kopfrohrs (71), um **dadurch** die Erstreckungsrichtung des Lenkers der Längsrichtung des Fahrrads entlang einzustellen, und
Schwenken des ersten Abschnitts (71) in einer zur Versatzrichtung des zweiten Abschnitts-(77) gegenüber dem ersten Abschnitt (71) orthogonalen Ebene, um den Lenker zur unteren Seite des Fahrzeugrumpfs zu bewegen.

## Revendications

1. Bicyclette comprenant un tube de fourche (21) et un dispositif de direction comportant un guidon (8) s'étendant dans des circonstances normales dans la direction de la largeur de la bicyclette, et un arbre de guidon (7) supportant le guidon (8) et étant supportée avec faculté de rotation au sein du tube de fourche (21), dans laquelle l'arbre de guidon (7) comprend:
- une première portion (71) raccordée au guidon (8),
- une seconde portion (77) supportée par le tube de fourche (21) en une position déviée de la première portion (71) dans une direction de déviation, la direction de déviation dans les circonstances normales étant orientée vers le côté arrière de la bicyclette, et
- un raccord (6) destiné à raccorder de manière pliable les première et seconde portions (71, 77),
**caractérisée en ce que**
le raccord (6) est réalisé de sorte que la première portion (71) peut tourner librement par rapport à la seconde portion (77) autour de l'axe de pivot du tube de fourche (21) et peut tourner dans un plan orthogonal à la direction de déviation de la seconde portion (77).

2. Bicyclette selon la revendication 1, dans laquelle ledit raccord (6) comprend
un moyen d'arbre (63; 76) s'étendant dans ladite direction de déviation à partir de ladite première portion (71) dudit montant de guidon (7), et
un moyen de fixation (61 ; 63a, 72) destiné à raccorder lesdites première et seconde portions en fixant ledit moyen d'arbre (63 ; 76) à ladite seconde portion (77).

3. Bicyclette selon la revendication 2, dans laquelle lesdites première et seconde portions (71, 77) sont engagées l'une avec l'autre au niveau de portions en creux et en saillie (62e, 7c) de celles-ci, et l'engagement et le désengagement desdites portions en creux et en saillie sont effectués en déplaçant ledit moyen d'arbre (63) dans ladite direction de déviation, et
des rotations de ladite première portion (71) autour de l'axe de pivot du tube de fourche (21) dans un plan orthogonal à la direction de déviation sont permises à la condition que lesdites portions évidées et dépassantes (62e, 7c) soient désengagées les unes des autres.

4. Bicyclette selon la revendication 2 ou 3, dans laquelle ledit moyen de fixation est construit de sorte que ledit moyen d'arbre (63) comporte un boulon ayant une portion filetée (63a) vissée dans ladite première portion (71, 7a), et une molette (61) engagée avec ladite seconde portion (77, 62).

5. Bicyclette selon la revendication 2 ou 3, dans laquelle
ledit moyen de fixation comprend un arbre excentrique (72) destiné à raccorder ledit moyen d'arbre (76) et ladite première portion (71), et
est construite de sorte que le raccordement et le décrochage desdites première et seconde portions (71, 77) sont effectués en tournant ledit arbre excentrique (72) et en déplaçant ainsi ledit moyen d'arbre (76) dans la direction longitudinale de celui-ci.

6. Bicyclette selon l'une quelconque des revendications 2 à 5, dans laquelle
un moyen de restriction (79) est prévu pour restreindre la quantité de mouvement dudit moyen d'arbre (76) dans la direction axiale, et
le désengagement desdites portions évidées et dépassantes est permis en dégageant ledit moyen de restriction (79).

7. Procédé de pliage d'un dispositif de direction d'une bicyclette, le dispositif de direction comportant un guidon (8) s'étendant dans des circonstances normales dans la direction de la largeur de la bicyclette, et un arbre de guidon (7) supportant le guidon (8) et étant supportée avec faculté de rotation au sein d'un tube de fourche (21) de la bicyclette, dans lequel l'arbre de guidon (7) comprend :
- une première portion (71) raccordée au guidon (8), et
- une seconde portion (77) supportée par le tube de fourche (21) en une position déviée de la première portion (71) dans une direction de déviation, la direction de déviation dans des circonstances normales étant orientée vers le côté arrière de la bicyclette,
**caractérisé par**
les étapes consistant à
- tourner la première portion (71) par rapport à la seconde portion (77) autour de l'axe de pivot du tube de fourche (21) et
- tourner la première portion (71) dans un plan orthogonal à la direction de déviation de la seconde portion (77).

8. Procédé selon la revendication 7, **caractérisé en ce que** le dispositif de direction comprend en outre un moyen d'arbre (63) s'étendant dans ladite direction de déviation à partir de ladite première portion (71) dudit arbre de guidon (7) pour être engagé avec ladite seconde portion (77), une portion filetée (63a) disposée dans ledit moyen d'arbre (63), un moyen de fixation (61) destiné à raccorder lesdites première et seconde portions (71, 72) en vissant ladite portion filetée (63a) dans ladite première (71) ou seconde portion, et un moyen de restriction (55) destiné à restreindre la quantité de mouvement dudit moyen d'arbre (63) dans la direction axiale, et
le procédé comprend les étapes consistant à :
desserrer ledit moyen de fixation (61),
dégager ledit moyen de restriction (55) et déplacer ledit moyen d'arbre (63) pour découpler ainsi ladite première portion (71) et ladite seconde portion (77),
tourner ladite première portion (71) par rapport à ladite seconde portion (77) autour de l'axe de pivot du tube de fourche (21) pour régler ainsi la direction d'extension dudit guidon (8) le long de la direction avant-arrière de la bicyclette, et
tourner ladite première portion (71) dans un plan orthogonal à la direction de déviation de ladite seconde portion (77) contre ladite première portion (71) pour déplacer ainsi ledit guidon (8) vers le côté inférieur de la bicyclette.

9. Procédé selon la revendication 7, **caractérisé en ce que** l'arbre de guidon (7) comprend en outre un moyen d'arbre (76) s'étendant dans ladite direction de déviation à partir de ladite première portion (71) de ladite tige de guidon (7) pour être engagé avec ladite seconde portion (77), un moyen de fixation comprenant un arbre excentrique (72) destiné à raccorder ledit moyen d'arbre (76) et ladite première portion (71) et construit de sorte que le raccordement et le dé-raccordement de ladite première portion (71) et de ladite seconde portion (77) sont effectués en tournant ledit arbre excentrique (72) et en déplaçant ainsi ledit moyen d'arbre (76) dans la direction longitudinale de celui-ci, et un moyen de restriction (79) destiné à restreindre la quantité de mouvement dudit moyen d'arbre (76) dans la direction axiale, et
**en ce que** le procédé comprend les étapes consistant à:
tourner ledit arbre excentrique (72) pour libérer la fixation par ledit moyen de fixation,
libérer ledit moyen de restriction (79) et déplacer ledit moyen d'arbre pour désengager ainsi ladite première portion (71) et ladite seconde portion (72),
tourner ladite première portion (71) par rapport à ladite seconde portion (77) autour de l'axe de pivot du tube de fourche (21) pour régler ainsi la direction d'extension dudit guidon le long de la direction avant-arrière de la bicyclette, et
tourner ladite première portion (71) dans un plan orthogonal à la direction de déviation de ladite seconde portion (77) en fonction de la première portion (71) pour déplacer ledit guidon vers le côté inférieur du cadre du véhicule.
